(19) Europäisches Patentamt / European Patent Office / Office européen des brevets

(11) **EP 3 614 471 A1**

(12) **EUROPEAN PATENT APPLICATION**
published in accordance with Art. 153(4) EPC

(43) Date of publication:
**26.02.2020 Bulletin 2020/09**

(21) Application number: 18788328.5

(22) Date of filing: **18.04.2018**

(51) Int Cl.:
*H01M 4/62* (2006.01)          *H01G 11/38* (2013.01)
*H01M 4/13* (2010.01)          *H01M 4/139* (2010.01)

(86) International application number:
**PCT/JP2018/016035**

(87) International publication number:
**WO 2018/194101 (25.10.2018 Gazette 2018/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.04.2017   JP 2017083189**

(71) Applicant: **Nippon A&L Inc.**
**Osaka-shi, Osaka 541-8550 (JP)**

(72) Inventors:
• **HIDA, Kazuo**
  **Osaka-shi**
  **Osaka 554-8558 (JP)**
• **SUGITA, Nozomi**
  **Niihama-shi**
  **Ehime 792-0801 (JP)**
• **SUZUKI, Nana**
  **Osaka-shi**
  **Osaka 554-8558 (JP)**

(74) Representative: **SSM Sandmair**
**Patentanwälte Rechtsanwalt**
**Partnerschaft mbB**
**Joseph-Wild-Straße 20**
**81829 München (DE)**

(54) **BINDER FOR ELECTRODE, COMPOSITION FOR ELECTRODE, AND ELECTRODE**

(57)   A binder for an electrode contains copolymer latex. The copolymer latex includes a structure unit derived from an ethylene unsaturated carboxylic acid monomer of 2 to 25 mass% and a structure unit derived from a monomer copolymerizable with the ethylene unsaturated carboxylic acid monomer of 75 to 98 mass%; the copolymer latex has a glass transition temperature of 25°C or less; the copolymer latex has a pH of 7 to 10; and the copolymer latex has an average particle size of 140 nm or less by a photon correlation method.

**Description**

TECHNICAL FIELD

The present invention relates to a binder for an electrode, a composition for an electrode containing the binder, and an electrode.

BACKGROUND ART

Recently, the storage of energy and the spread of a secondary cell and a capacitor as a supply source have been remarkable for the trend of the emphasis on the carbon dioxide-free society, so that properties such as a further larger volume and cycle life have been demanded.

As a method for producing an electrode used in an electrochemical device such as lithium ion secondary cell and lithium ion capacitor, for example, a method has been known in which a composition for an electrode containing an active material that is capable of occluding, absorbing, detaching, and emitting an ion, and a polymer binder as a binder for an electrode is prepared to be applied onto a metal material (hereinafter, referred to as an electric collector) to be then dried. The polymer binder has been substantially involved in the properties such as volume of the electrochemical device, cycle life, or the like in addition to a binding force of binding the active materials to themselves or binding the active material to the electric collector (ref: for example, Patent Document 1).

Generally, in the case of an aqueous dispersion-type binder in which a diene-type rubber is dispersed in water illustrated in Patent Document 1, it has been known that an excellent peeling strength is shown by point adhesion of the active materials to themselves, or the active material to the electric collector. Also, it has been known that a binder utilizing each of the properties is applied to an active material layer so as to further enhance the cell properties. For example, Patent Document 2 describes that a nonaqueous electrolyte cell having excellent low temperature properties is achieved by being provided with a negative electrode layer including a water-soluble or aqueous dispersion-type second binder, in addition to forming the negative electrode layer including a first binder that has electrolytic solution resistance and is capable of being dissolved in an organic solvent on the electric collector.

Patent Document 3 discloses that an electrode structure for a low resistant and high-volume electrochemical capacitor having improved long-term reliability can be provided by using a point adhesion-type binder such as styrene butadiene rubber in an electrode active material layer in contact with the electric collector, and by using a line adhesion-type binder such as polyvinylidene fluoride (PVDF) in an electrode active material layer in which electrode active material layers are in contact with each other.

However, in the technology, there is a problem that a step of laminating the plurality of electrode active material layers on the electric collector is necessary, so that its production step is complicated.

Meanwhile, in recent years, as the active material for a cell electrode capable of realizing a large volume, the use of an alloy-type active material instead of a conventional graphite-type active material has been considered. However, the alloy-type active material such as silicone-type has substantially larger volume expansion than the graphite, and there has been a substantial problem that repeating charging and discharging results in destruction of the electrode structure. As the binder for an electrode for the alloy-type active material, an example of the use of polyimide that forms a high strength film is reported (Patent Document 4). However, the technology uses the organic solvent-type, so that in addition to the problem in environmental adaptability, there are problems in workability and practicality such as requirement of high temperature treatment of 300°C or more at the time of the production of the electrode.

Citation List

Patent Document

Patent Document 1: Japanese Unexamined Patent Publication No. 2013-229327
Patent Document 2: Japanese Unexamined Patent Publication No. 2016-177948
Patent Document 3: Japanese Unexamined Patent Publication No. 2013-140977
Patent Document 4: International Patent Publication No. 2012-132396

## SUMMARY OF THE INVENTION

### PROBLEM TO BE SOLVED BY THE INVENTION

An object of the present invention is to provide a binder for an electrode that is an aqueous dispersion-type binder having excellent coatability of an active material and capable of obtaining an electrode having excellent cycle properties at the time of being brought into a cell, a composition for an electrode containing the binder, and an electrode.

### MEANS FOR SOLVING THE PROBLEM

The present invention includes a binder for an electrode containing copolymer latex, wherein the copolymer latex includes a structure unit derived from an ethylene unsaturated carboxylic acid monomer of 2 to 25 mass% and a structure unit derived from a monomer copolymerizable with the ethylene unsaturated carboxylic acid monomer of 75 to 98 mass%; the copolymer latex has a glass transition temperature of 25°C or less; the copolymer latex has a pH of 7 to 10; and the copolymer latex has an average particle size of 140 nm or less by a photon correlation method.

The binder for an electrode having the above-described structure has excellent coatability with respect to an active material, so that it is an aqueous dispersion-type binder, and can be present so as to cover the active material in the electrode. Also, the binder for an electrode has uniform flexibility, so that it can expand and contract following the movement of expansion and contraction of the active material. By using the electrode, the cycle properties of an electrochemical device can be improved.

By adjusting a degree of swelling of an electrolytic solution (ethylene carbonate/diethyl carbonate = 1/2 (ratio by volume)) of the copolymer latex contained in the binder for an electrode of the present invention to 1.3 to 10, for example, a lithium ion easily transmits through a binder layer that covers the active material, so that excellent electrically conductive properties can be achieved, and an electrochemical device having excellent input-output properties can be provided.

Furthermore, the copolymer latex contained in the binder for an electrode of the present invention includes the structure unit derived from the monomer copolymerizable with the ethylene unsaturated carboxylic acid monomer, and derived from a monomer having a glass transition temperature of a homopolymer of 80°C or more of 25 mass% or more, so that a binder layer that covers the active material can be made stronger, a force against the expansion of the active material can be given by the stress necessary at the time of extension following the expansion of the active material, and the electrode structure (shape retention properties) can be retained after repeating charging and discharging. In this manner, the binder for an electrode can be applied to an alloy-type active material having larger volume expansion.

The present invention provides a composition for an electrode containing the above-described binder for an electrode and an active material.

The present invention provides an electrode including an electric collector, and an electrode mixture layer formed from the above-described composition for an electrode provided on the electric collector.

### EFFECT OF THE INVENTION

According to the present invention, the electrode that is the aqueous dispersion-type binder having excellent coatability of the active material and having excellent cycle properties at the time of being brought into a cell can be obtained.

### DESCRIPTION OF EMBODIMENTS

Hereinafter, a preferable embodiment of the present invention is described in detail. The present invention is however not limited to the following embodiment.

A binder for an electrode of the present embodiment contains copolymer latex, and the copolymer latex includes a structure unit derived from an ethylene unsaturated carboxylic acid monomer of 2 to 25 mass% and a structure unit derived from a monomer copolymerizable with the ethylene unsaturated carboxylic acid monomer of 75 to 98 mass%.

The structure unit derived from the ethylene unsaturated carboxylic acid monomer is a structure unit formed by polymerizing the ethylene unsaturated carboxylic acid monomer. Examples of the ethylene unsaturated carboxylic acid monomer include mono- or di-carboxylic acid monomers such as acrylic acid, methacrylic acid, crotonic acid, maleic acid, fumaric acid, and itaconic acid. Examples thereof may include anhydrides thereof. These monomers may be used alone or in combination of two or more. In view of coatability with respect to an active material, a monocarboxylic acid monomer is preferably included, among all, an acrylic acid is preferably included.

The structure unit derived from the monomer copolymerizable with the ethylene unsaturated carboxylic acid monomer is a structure unit formed by polymerizing the monomer copolymerizable with the ethylene unsaturated carboxylic acid monomer. Examples of the monomer copolymerizable with the ethylene unsaturated carboxylic acid monomer include monomers such as aliphatic conjugated diene monomer, unsaturated carboxylic acid alkyl ester monomer, alkenyl aromatic monomer, vinyl cyanide monomer, unsaturated monomer having a hydroxyalkyl group, unsaturated carboxylic acid amide monomer, and polyfunctional ethylene unsaturated monomer having two or more unsaturated double bonds.

Examples of the aliphatic conjugated diene monomer include monomers such as 1,3-butadiene, 2-methyl-1,3-butadiene, 2,3-dimethyl-1,3-butadiene, 2-chloro-1,3-butadiene, substituted straight-chain conjugated pentadienes, and substituted and side-chain conjugated hexadienes. These may be used alone or in combination of two or more. In the present embodiment, in view of easy industrial production, easy availability, and cost, particularly preferably 1,3-butadiene is used.

Examples of the unsaturated carboxylic acid alkyl ester monomer include methyl acrylate, methyl methacrylate, ethyl acrylate, ethyl methacrylate, butyl acrylate, glycidyl methacrylate, dimethyl fumarate, diethyl fumarate, dimethyl maleate, diethyl maleate, dimethyl itaconate, monomethyl fumarate, monoethyl fumarate, and 2-ethylhexyl acrylate. These may be used alone or in combination of two or more. In the present embodiment, in view of easy industrial production, easy availability, and cost, particularly preferably, methyl methacrylate, ethyl acrylate, butyl acrylate, and 2-ethylhexyl acrylate are used.

Examples of the alkenyl aromatic monomer include styrene, $\alpha$-methyl styrene, methyl-$\alpha$-methyl styrene, and vinyl toluene. These may be used alone or in combination of two or more. In the present embodiment, in view of easy industrial production, easy availability, and cost, particularly preferably, styrene is used.

Examples of the vinyl cyanide monomer include monomers such as acrylonitrile, methacrylonitrile, $\alpha$-chloro-acrylonitrile, and $\alpha$-ethylacrylonitrile. These may be used alone or in combination of two or more. In the present embodiment, in view of easy industrial production, easy availability, and cost, particularly preferably, acrylonitrile and methacrylonitrile are used.

Examples of the unsaturated monomer having a hydroxyalkyl group include $\beta$-hydroxyethyl acrylate, $\beta$-hydroxyethyl methacrylate, hydroxypropyl acrylate, hydroxypropyl methacrylate, hydroxybutyl acrylate, hydroxybutyl methacrylate, 3-chloro-2-hydroxypropyl methacrylate, di-(ethyleneglycol) maleate, di-(ethyleneglycol) itaconate, 2-hydroxyethyl maleate, bis(2-hydroxyethyl) maleate, and 2-hydroxyethylmethyl fumarate. These may be used alone or in combination of two or more.

Examples of the unsaturated carboxylic acid amide monomer include acrylamide, methacrylamide, N-methylolacrylamide, N-methylolmethacrylamide, and N,N-dimethylacrylamide. These may be used alone or in combination of two or more.

Examples of the polyfunctional ethylene unsaturated monomer having two or more unsaturated double bonds include allyl methacrylate, ethylene glycol di(meth)acrylate, diethylene glycol di(meth)acrylate, polyethylene glycol di(meth)acrylate such as triethylene glycol di(meth)acrylate, and divinyl compounds such as divinyl benzene. These may be used alone or in combination of two or more. Preferably, allyl methacrylate, ethylene glycol dimethacrylate, and divinyl benzene are used.

In addition to the above-described monomers, any monomer used in general emulsion polymerization such as ethylene, propylene, vinyl acetate, vinyl propionate, vinyl chloride, and vinylidene chloride can be used.

The copolymer latex contained in the binder for an electrode of the present embodiment includes the structure unit derived from the ethylene unsaturated carboxylic acid monomer of 2 to 25 mass% and the structure unit derived from the monomer copolymerizable with the ethylene unsaturated carboxylic acid monomer of 75 to 98 mass%. The structure unit derived from the ethylene unsaturated carboxylic acid monomer is included by preferably 5 mass% or more, and preferably 24.5 mass% or less. By adjusting the content ratio within the above-described range, the improvement of the coatability of the binder for an electrode with respect to the active material can be achieved.

The kind of the copolymer latex contained in the binder for an electrode of the present embodiment is not particularly limited, and examples thereof include conjugated diene copolymers such as styrene·butadiene copolymer, acrylonitrile·butadiene copolymer, methyl methacrylate·butadiene copolymer, and vinyl pyridine·butadiene copolymer and aqueous dispersion such as acrylic polymer, vinyl acetate polymer, ethylene·vinyl acetate copolymer, chloroprene polymer, and natural rubber. Among all, preferably, a conjugated diene copolymer and an acrylic copolymer are used. These may be used alone or in combination of two or more.

In the case of the conjugated diene copolymer, as the structure unit derived from the monomer copolymerizable with the ethylene unsaturated carboxylic acid monomer, a structure unit derived from an aliphatic conjugated diene monomer, a structure unit derived from an aromatic vinyl monomer, a structure unit derived from a vinyl cyanide monomer, and a structure unit derived from an unsaturated carboxylic acid alkyl ester monomer are preferably included.

The structure unit derived from the aliphatic conjugated diene monomer is included by preferably 10 weight% or more, more preferably 20 weight% or more, and preferably 65 weight% or less, more preferably 55 weight% or less. The structure unit derived from the aromatic vinyl monomer is included by preferably 15 weight% or more, more preferably 20 weight% or more, and preferably 60 weight% or less, more preferably 55 weight% or less. The structure unit derived from the vinyl cyanide monomer is included by preferably 0 weight% or more, more preferably 5 weight% or more, and preferably 30 weight% or less, more preferably 20 weight% or less. The structure unit derived from the unsaturated carboxylic acid alkyl ester monomer is included by preferably 0 weight% or more, more preferably 2 weight% or more, and preferably 65 weight% or less, more preferably 55 weight% or less.

In the case of the acrylic copolymer, as the structure unit derived from the monomer copolymerizable with the ethylene unsaturated carboxylic acid monomer, a structure unit derived from an unsaturated carboxylic acid alkyl ester monomer and a structure unit derived from an aromatic vinyl monomer are preferably included.

The structure unit derived from the unsaturated carboxylic acid alkyl ester monomer is included by preferably 15 weight% or more, more preferably 20 weight% or more, and preferably 90 weight% or less, more preferably 85 weight% or less. The structure unit derived from the aromatic vinyl monomer is included by preferably 0 weight% or more, more preferably 15 weight% or more, and preferably 85weight% or less, more preferably 80 weight% or less. In the case of the acrylic copolymer, the content of the structure unit derived from the aliphatic conjugated diene monomer is preferably below 15 weight%, more preferably below 10 weight%.

A glass transition temperature (hereinafter, may be referred to as Tg) of the copolymer latex contained in the binder for an electrode of the present embodiment is 25°C or less, preferably -40°C or more, more preferably -30°C or more. When the glass transition temperature of the copolymer latex is within the above-described range, the improvement of the coatability of the binder for an electrode with respect to the active material can be achieved.

In the present application, the glass transition temperature of the copolymer latex is defined as follows: after a device is cooled to a temperature that is lower than the Tg to be expected by about 50°C in advance by using a differential scanning calorimeter in conformity with JIS K7121, the temperature is increased at a heating rate of 10°C/min, and a DSC curve is depicted. The temperature of the peak top of a differential curve at the time of depicting the differential curve of the DSC curve is referred to as the glass transition temperature. When the two or more peaks are recognized, the peak having the largest area is defined as the peak top temperature. When the peak of the differential curve is not clearly recognized or the peak shows a trapezoidal shape and the top is not easily recognized, a theoretical glass transition temperature on calculation obtained by a FOX formula from the Tg of the homopolymer is calculated based on the composition of the structure unit constituting the copolymer to be defined as the Tg of the copolymer latex. The Tg of the homopolymer can, for example, use the value described in a known document such as "Polymer Handbook (third edition)". Or, the homopolymer is actually produced, and a measured value by the above-described method may be also used.

The average particle size of the copolymer latex contained in the binder for an electrode of the present embodiment by a photon correlation method is 140 nm or less, preferably 120 nm or less. By adjusting the average particle size within the above-described range, the improvement of the coatability of the binder for an electrode with respect to an active material can be achieved. In view of productivity of the copolymer latex, the average particle size thereof is preferably 30 nm or more, further more preferably 40 nm or more.

The pH of the copolymer latex contained in the binder for an electrode of the present embodiment is 7 to 10, preferably 9.5 or less, more preferably 9 or less. By adjusting the pH within the above-described range, the improvement of the coatability of the binder for an electrode with respect to an active material can be achieved. The pH of the copolymer latex can be adjusted by a known pH adjusting agent such as ammonia, potassium hydroxide, and sodium hydroxide. Also, the degree of swelling of the electrolytic solution (ethylene carbonate/diethyl carbonate = 1/2 (ratio by volume)) of the copolymer latex contained in the binder for an electrode of the present embodiment is preferably 1.3 to 10, more preferably 1.5 or more, further more preferably 2.0 or more, and preferably 9.5 or less, more preferably 9.0 or less. By adjusting the degree of swelling within the above-described range, the ion can easily transmit through the binder that covers the active material, so that the cell having excellent input-output properties can be provided. The degree of swelling of the electrolytic solution can be adjusted by changing the kind and the amount of the ethylene unsaturated carboxylic acid monomer, the unsaturated carboxylic acid alkyl ester monomer, and the vinyl cyanide monomer, and adjusting the gel content of the copolymer by changing the kind and the amount of a molecular weight adjuster. The degree of swelling of the electrolytic solution can be measured by a method of the following Examples.

The copolymer latex contained in the binder for an electrode of the present embodiment includes the structure unit derived from the monomer copolymerizable with the ethylene unsaturated carboxylic acid monomer, and derived from a monomer having the Tg of a homopolymer of 80°C or more of preferably 25 mass% or more, more preferably 30 mass% or more, further more preferably 35 mass% or more, and preferably, 85 mass% or less, more preferably 80 mass% or less, further more preferably 75 mass% or less. By adjusting the structure unit within the above-described range, when the binder for an electrode covers the active material, the binder layer that covers the active material can be made stronger, the shape retention properties are excellent, and the binder for an electrode can be applied to an alloy-type active material having larger volume expansion. The structure unit derived from the monomer having the Tg of the homopolymer of 80°C or more is not particularly limited, and can be selected from an unsaturated carboxylic acid alkyl ester monomer, an alkenyl aromatic monomer, a vinyl cyanide monomer, an unsaturated monomer having a hydroxyalkyl group, an unsaturated carboxylic acid amide monomer, or the like. As the Tg of the homopolymer, the value described in a known document can be used. Or, the homopolymer is actually produced, and the value measured by the above-described method can be used.

The copolymer latex contained in the binder for an electrode of the present embodiment is obtained by emulsion polymerization. Hereinafter, the emulsion polymerization of the present embodiment is described.

To carry out the above-described emulsion polymerization, in addition to the above-described monomer component, an emulsifier (surfactant), a polymerization initiator, and furthermore, if necessary, a chain transfer agent, a reducing agent, etc. can be blended.

Examples of the emulsifier (surfactant) include anionic surfactants such as fatty alcohol sulfate ester salt, alkylbenzene sulfonic acid salt, alkyldiphenylether disulfonic acid salt, aliphatic sulfonic acid salt, aliphatic carboxylic acid salt, dehydroabietic acid salt, formalin condensates of naphthalenesulfonic acid, and sulfate ester salt of nonionic surfactant and nonionic surfactants such as polyethylene glycols of alkyl ester type, alkyl phenyl ether type, and alkyl ether type. These may be used alone or in combination of two or more. The mixed amount of the emulsifier can be appropriately adjusted in consideration of the combination with the other additives or the like.

Examples of the polymerization initiator include water-soluble polymerization initiators such as lithium persulfate, potassium persulfate, sodium persulfate, and ammonium persulfate and oil-soluble polymerization initiators such as cumene hydroperoxide, benzoyl peroxide, t-butylhydroperoxide, acetyl peroxide, diisopropylbenzene hydroperoxide, and 1,1,3,3-tetramethylbutylhydroperoxide. These may be used alone or in combination of two or more. Particularly preferably, potassium persulfate, sodium persulfate, cumene hydroperoxide, t-butylhydroperoxide are used. The mixed amount of the polymerization initiator is not particularly limited, and appropriately adjusted in consideration of the combination of the monomer composition, the pH of the polymerization reaction, the other additives, or the like.

Examples of the chain transfer agent include alkyl mercaptans such as n-hexylmercaptan, n-octylmercaptan, t-octylmercaptan, n-dodecylmercaptan, t-dodecylmercaptan, and n-stearyl mercaptan; xanthogen compounds such as dimethylxanthogendisulfide and diisopropylxanthogendisulfide; thiuram compounds such as tetramethylthiuram disulfide, tetraethylthiuram disulfide, and tetramethylthiuram monosulfide; phenol compounds such as 2,6-di-t-butyl-4-methylphenol and styrenated phenol; allyl compounds such as allyl alcohol; halogenated hydrocarbon compounds such as dichloromethane, dibromomethane, and carbon tetrabromide; vinyl ethers such as $\alpha$-benzyloxystyrene, $\alpha$-benzyloxyacrylonitrile, and $\alpha$-benzyloxyacrylamide; triphenylethane, pentaphenylethane, acrolein, methacrolein, thioglycolic acid, thiomalic acid, 2-ethylhexylthioglycolate, terpinolen, and $\alpha$-methylstyrene dimer. These may be used alone or in combination of two or more. The mixed amount of the chain transfer agent can be appropriately adjusted in consideration of the combination with the other additives or the like.

Examples of the reducing agent include reducing sugars such as dextrose and saccharose; amines such as dimethylaniline and triethanol amine; carboxylic acids such as L-ascorbic acid, erythorbic acid, tartaric acid, and citric acid and their salts; and sulfite, bisulfite, pyrosulfite, dithionite, dithionate, thiosulfate, formaldehydesulfonate, and benzaldehydesulfonate. Particularly preferably, L-ascorbic acid and erythorbic acid are used. The mixed amount of the reducing agent can be appropriately adjusted in consideration of the combination with the other additives or the like.

To carry out the above-described emulsion polymerization for the purpose of controlling the molecular weight and the cross-linking structure of the copolymer, a hydrocarbon compound can be used. Examples thereof include saturated hydrocarbons such as pentane, hexane, heptane, octane, cyclohexane, and cycloheptane; unsaturated hydrocarbons such as pentene, hexene, heptene, cyclopentene, cyclohexene, cycloheptene, 4-methylcyclohexene, and 1-methylcyclohexene; and aromatic hydrocarbons such as benzene, toluene, and xylene. In view of easy collection, particularly preferably, cyclohexene and toluene are used.

Furthermore, if necessary, an additive may be added to the reaction system of the above-described emulsion polymerization. Examples thereof include oxygen capturing agents, chelating agents, dispersants, antifoaming agents, antioxidants, antiseptics, antibacterial agents, flame retardants, and ultraviolet absorbers. The kind and the used amount of the additives are not particularly limited, and can be appropriately used with an appropriate amount.

The copolymer latex of the present embodiment can be used by mixing with the other binder or the like as long as the effect of the present invention is not damaged.

The binder for an electrode of the present embodiment can be, for example, used for a composition for an electrode for forming an electrode of the electrochemical device such as lithium ion secondary cell, lithium ion capacitor, and electricity double layer capacitor. Preferably, the binder for an electrode can be used for the composition for an electrode for forming a negative electrode of the lithium ion secondary cell.

According to the binder for an electrode, the copolymer latex contained in the binder for an electrode includes the structure unit derived from the ethylene unsaturated carboxylic acid monomer of 2 to 25 mass% and the structure unit derived from the monomer copolymerizable with the ethylene unsaturated carboxylic acid monomer of 75 to 98 mass%; the glass transition temperature of the copolymer latex is 25°C or less; the pH of the copolymer latex is 7 to 10; and the average particle size of the copolymer latex by the phantom correlation method is 140 nm or less.

Thus, the binder for an electrode that is the aqueous dispersion-type binder having excellent coatability of the active material and capable of retaining the electrode structure after repeating charging and discharging by being present so as to cover the active material; the composition for an electrode containing the binder; and the electrode can be provided.

In this manner, the electrode that is capable of improving the cycle properties of the electric device can be produced.

According to the binder for an electrode, the degree of swelling of the electrolytic solution (ethylene carbonate/diethyl carbonate = 1/2 (ratio by volume)) of the copolymer latex contained in the binder for an electrode is adjusted to 1.3 to 10.

Thus, the binder for an electrode that is present so as to cover the active material, and has excellent ion transmitting properties can be provided.

In this manner, the electrochemical device having excellent input-output properties can be obtained.

According to the binder for an electrode, the copolymer latex contained in the binder for an electrode includes the structure unit derived from the monomer copolymerizable with the ethylene unsaturated carboxylic acid monomer, and derived from the monomer having a glass transition temperature of the homopolymer of 80°C or more of 25 mass% or more.

Thus, the binder for an electrode can be applied to the alloy-type active material having larger volume expansion, so that the electrochemical device having a further larger volume can be obtained.

Next, the composition for an electrode of the present embodiment is described.

The composition for an electrode of the present embodiment contains the above-described binder for an electrode of the present embodiment.

The composition for an electrode of the present embodiment can include an active material and if necessary, an auxiliary in addition to the binder for an electrode of the present embodiment.

When the active material forms a positive electrode, it is a positive electrode active material, and when the active material forms a negative electrode, it is a negative electrode active material. The positive electrode active material is not particularly limited, and in the case of the lithium ion secondary cell, examples thereof include transition metal oxides such as $MnO_2$, $MoO_3$, $V_2O_5$, $V_6O_{13}$, $Fe_2O_3$, and $Fe_3O_4$; composite metal oxides having a layer structure such as $LiCoO_2$, $LiMnO_2$, $LiNiO_2$, and $LMO_2$ (M includes two or three or more Ni, Mn, Co, Al, or the like), a spinel structure such as $LiMn_2O_4$ and $LiM_2O_4$ (M includes two or three or more Ni, Mn, Co, Al, or the like), and an olivine structure such as $LiFePO_4$; lithium-surplus composite oxides such as $Li_2MnO_3$; transition metal sulfides such as $TiS_2$, $TiS_3$, $MoS_3$, and $FeS_2$; and metal fluorides such as $CuF_2$ and $NiF_2$. These may be used alone or in combination of two or more.

The negative electrode active material is not particularly limited, and in the case of the lithium ion secondary cell, examples thereof include electrically conductive carbonaceous materials such as calcined products and pulverized products of carbon fluoride, graphite, carbon fiber, resin calcined carbon, linear graphite hybrid, coke, thermal decomposition gas layer growing carbon, furfuryl alcohol resin calcined carbon, mesocarbon microbeads, mesophase pitch-type carbon, graphite whisker, quasi-isotropic carbon, and natural material; electrically conductive polymers such as polyacene organic semiconductor, polyacetylene, and poly-p-phenylene; metal simple materials such as silicon and tin; and composite materials such as a metal oxide or an alloy of the metal thereof. These may be used alone or in combination of two or more.

In the case of being used in the lithium ion capacitor electrode, carbon materials such as graphite, hardly graphitizable carbon, hard carbon, and coke, polyacene organic semiconductors (PAS), or the like can be used.

In the case of being used in the electricity double layer capacitor electrode, activated carbon, activated carbon fiber, silica, alumina, or the like can be used.

Examples of the auxiliary include water-soluble thickener, dispersant, stabilizer, and electrically conductive agent. Examples of the water-soluble thickener include carboxymethyl cellulose, methyl cellulose, hydroxymethyl cellulose, ethyl cellulose, polyvinyl alcohol, polyacrylic acid (acrylate), starch oxide, phosphorylated starch, and casein. Examples of the dispersant include sodium hexametaphosphate, sodium tripolyphosphate, sodium pyrophosphate, and sodium polyacrylate. Examples of the stabilizer include nonionic surfactant and anionic surfactant. Examples of the electrically conductive agent include acetylene black and carbon nanofiber. These may be used alone or in combination of two or more.

The content of the binder for an electrode in the composition for an electrode with respect to 100 parts by mass of the active material (solid content) is preferably 0.1 to 10 parts by mass (solid content), more preferably 0.5 to 7 parts by mass. The content of the binder for an electrode is preferably set at 0.1 parts by mass or more in view of the achievement of excellent adhesive force with respect to the active material, the electric collector, or the like. Also, the content of the binder for an electrode is preferably set at 10 parts by mass or less in view of prevention of a reduction of the device properties by a substantial increase in the over-voltage at the time of being assembled as the electrochemical device.

By applying the composition for an electrode to the electric collector to be dried, so that an electrode mixture layer is formed on the electric collector, and the electrode can be obtained. The electrode is, for example, used as a positive electrode plate or a negative electrode plate of the lithium ion secondary cell.

As a method for applying the composition for an electrode to the electric collector, for example, a known method such as reverse roll method, comma bar method, gravure method, and air knife method can be used, and in drying, left to dry, a fan dryer, a hot air dryer, an infrared ray heater, a far infrared ray heater, or the like are used.

The composition for an electrode of the present embodiment is, for example, preferably used for forming an electrochemical device, and an electrode for a lithium ion secondary cell, a lithium ion capacitor, and an electricity double layer capacitor.

Examples

Hereinafter, the present invention is further described based on Examples. The present invention is however not limited by the following Examples.

<Production of Copolymer Latex>

(Example 1)

After 0.2 parts of t-dodecyl mercaptan, each of the monomers described in Table 1, sodium dodecylbenzenesulfonate, and pure water were added to a pressure resistant polymerization reaction device under a nitrogen atmosphere to be increased at 70°C, 1 part of potassium persulfate was added thereto to start polymerization. The polymerization was stopped in 8 hours after the start of the polymerization, and a pH thereof was adjusted with an aqueous solution of sodium hydroxide. Thereafter, by removing an unreacted monomer and another low-boiling point compound by steam distillation, copolymer latex A was obtained.

(Examples 2 to 13 and Comparative Examples 1 to 10)

Copolymer latex B to W were obtained in the same manner as that of Example 1, except that each of the monomers, the sodium dodecylbenzenesulfonate, and the pure water were charged with the mixed amount shown in Tables 1 to 4.

The Tg (literature value) of the homopolymer of the monomer copolymerizable with the ethylene unsaturated carboxylic acid monomer used in each of Examples and Comparative Examples is shown in Tables 1 to 4.

In the copolymer latex V and W, the viscosity of the copolymer latex was high and had poor workability, so that the measurement and the evaluation of each of the properties (average particle size, glass transition point, and degree of swelling of electrolytic solution) were not carried out.

<Measurement of Average Particle Size of Polymer Latex by Photon Correlation Method>

The average particle size of the polymer latex was measured by using FPAR-1000 (manufactured by OTSUKA ELECTRONICS CO., LTD) by a method in conformity with JIS Z8826. The results are shown in Tables 1 to 4.

<Measurement of Glass Transition Temperature of Polymer Latex>

A film was produced by applying about 0.5 g of copolymer latex to a glass plate to be dried at 70°C for 4 hours. The film after drying was set in an aluminum pan for DSC test, the sample was uniformized by heating again, thereafter, the measurement temperature was increased to -100 to 150°C at a rate of 10°C/min, and the starting point of the heat absorption of the phase change was read to be defined as the glass transition temperature of the copolymer latex. The results are shown in Tables 1 to 4.

<Measurement of Degree of Swelling of Electrolytic Solution of Polymer Latex>

A film was produced by vacuum drying the copolymer latex at 80°C for 24 hours to be cut into a piece having 5 mm square. The cut film piece was immersed in an electrolytic solution (ethylene carbonate/diethyl carbonate = 1/2 (ratio by volume)) at 60°C for 72 hours, thereafter, the film piece was taken out, and the film piece weight in a state of being swollen in the electrolytic solution was measured (the weight at this time was referred to as a "swollen film weight"). Thereafter, the film piece was subjected to vacuum drying at 100°C for 72 hours, so that the film piece weight after drying was measured (the weight at this time was referred to as a "dry film weight"). The degree of swelling was calculated by the following formula. The results are shown in Tables 1 to 4.

$$\text{Degree of swelling} = \text{swollen film weight} / \text{dry film weight}$$

<Adjustment of Composition for Negative Electrode>

As a negative electrode active material, 100 parts by mass of natural graphite, as a thickener, 1 part by mass of aqueous solution of carboxymethyl cellulose in terms of solid content were put into a planetary mixer (manufactured by PRIMIX Corporation, 2P-1 type) to be stirred at 40 rpm for 20 minutes. Next, pure water with an appropriate amount was added thereto so that the total solid content was 50% to be stirred at 40 rpm for 20 minutes. Thereafter, as the binder for an electrode, 1 part by mass of each of the copolymer latex of Examples and Comparative Examples in terms of solid content and the pure water with an appropriate amount were added thereto so that the total solid content was 45 mass% to be stirred at 40 rpm for 10 minutes, thereby preparing a composition for a negative electrode.

<Production of Negative Electrode>

The composition for a negative electrode obtained as described above was applied to a copper foil having a thickness of 20 $\mu$m to be an electric collector to be dried at 80°C for 10 minutes. Thereafter, the obtained layer was roll-pressed at a room temperature, so that a negative electrode having a coated layer of 70 $\mu$m in thickness was obtained. When the coatability of the binder for an electrode with respect to the active material was evaluated, the one in a state before rolling with a roll press was used.

<Evaluation of Coatability of Binder for Negative Electrode to Active Material>

The binder for an electrode covered more parts of the surface of the active material, so that the cycle properties at the time of the repeating charging and discharging were improved. Thus, in each of the negative electrode sheets obtained by the above-described method, the coatability of the binder for an electrode with respect to the active material was evaluated by the following method. That is, each of the negative electrode sheets (before rolling) obtained as described above was cut into a piece having 1 cm square, and the obtained piece was dyed under an atmosphere of osmium tetraoxide to be thereafter observed at a magnification of 5000 times by using a scanning electron microscope (manufactured by JEOL Ltd., trade name: JSM-6510LA). In the SEM observation image, the area to which the binder for an electrode was attached on the active material with respect to the area of the active material was visually checked and evaluated as follows. Of the 8 images of the SEM observation images, the most average image was selected and evaluated. The results are shown in Tables 1 to 4.

A: 80% or more of the surface of the active material was covered with the binder for an electrode.
B: 60% or more and below 80% of the surface of the active material was covered with the binder for an electrode.
C: 40% or more and below 60% of the surface of the active material was covered with the binder for an electrode.
D: Only below 40% of the surface of the active material was covered with the binder for an electrode.

<Adjustment of Composition for Positive Electrode>

In advance, 100 parts by mass of $LiCoO_2$ as a positive electrode active material and 5 parts by mass of acetylene black as an electrically conductive agent were dry-blended to be put into a planetary mixer (manufactured by PRIMIX Corporation, 2P-1 type). Next, 5 parts by mass of solution of N-methyl-2-pyrolidone (NMP) of polyvinylidene fluoride (PVdF) in terms of PVdF solid content was put thereto to be stirred at 50 rpm for 30 minutes. Thereafter, furthermore, 5 parts by mass of solution of NMP solution of PVdF in terms of PVdF solid content was put thereto to be stirred at 50 rpm for 30 minutes. A NMP solvent with an appropriate amount was added thereto so that the total solid content was 65 mass% to be further stirred at 50 rpm for 30 minutes, so that a composition for a positive electrode was prepared.

<Production of Positive Electrode>

The composition for a positive electrode obtained as described above was applied to an aluminum foil having a thickness of 20 $\mu$m to be an electric collector to be dried at 130°C for 20 minutes. Thereafter, the obtained layer was roll-pressed at a room temperature, so that a positive electrode having a coated layer of 70 $\mu$m in thickness was obtained.

<Production of Laminate Cell>

The obtained positive electrode was cut pressingly so that the long side of an electrode portion was 103 mm, the short side thereof was 60 mm, and a tab welded portion was 15 mm square, so that a tab made of aluminum was welded to the tab welded portion. The obtained negative electrode was cut pressingly so that the long side of an electrode portion was 107 mm, the short side thereof was 62 mm, and a tab welded portion was 15 mm square, so that a tab made of nickel was welded to the tab welded portion. Also, a separator made of polypropylene was cut into a rectangular shape having the long side of 117 mm and the short side of 66 mm to be provided between the positive and negative electrodes that were formed. The electrode assembly was packed with an aluminum laminate sheet, and an electrolytic solution was poured thereto to be then sealed, so that a laminate cell was produced. At this time, in the electrolytic solution, the ethylene carbonate (EC): diethyl carbonate (DEC) = 1:1 (ratio by volume) including 1M $LiPF_6$ was used.

<Evaluation of Input-Output Properties>

The obtained laminate cell was charged until the current rate of 0.01 C after reaching 4.2 V at a constant current rate of 0.1 C of CCCV conditions and a rest period of 10 minutes was set. Thereafter, the electricity thereof was discharged until reaching 3V at a constant current rate of 0.1 C of CC conditions. The operation was repeated 3 times. At the fourth charging, the obtained laminate cell was charged until the current rate of 0.02 C after reaching 4.2 V at a constant current rate of 0.2 C of CCCV conditions and a rest period of 10 minutes was set. Thereafter, the electricity thereof was discharged until reaching 3V at a constant current rate of 1 C of CC conditions. The fifth charging and the rest period were carried out under the same conditions as those of the fourth charging, and a discharge volume was measured by setting the constant current rate to 3C at the time of discharging. As the evaluation of the input-output properties, the ratio of the discharge volume at 3C with respect to the discharge volume at 1C was used. When the volume retention rate was over 70%, the case was evaluated as A, and when the volume retention rate was below 70%, the case was evaluated as B. The results are shown in Tables 1 to 4.

<Evaluation of Shape Retention Properties>

The laminate cell after the input-output properties test was charged until the current rate of 0.02 C after reaching 4.2 V at a constant current rate of 0.2 C of CCCV conditions and a rest period of 10 minutes was set. Thereafter, the electricity thereof was discharged until reaching 3V at a constant current rate of 1 C of CC conditions. The operation was repeated 100 times. After the 100th cycles, the laminate cell was disassembled, and the surface of the negative electrode mixture layer that was taken out was rubbed with a finger, and the state of the mixture layer was visually evaluated as follows. The results are shown in Tables 1 to 4.

A: Peeling of the mixture layer was not confirmed.

B: Inside of the mixture layer was peeled.

C: Mixture layer was peeled from the surface of the copper foil.

[Table 1]

| Table 1 | | | | | | | | |
|---|---|---|---|---|---|---|---|---|
| | | Example | | | | | | |
| | | 1 | 2 | 3 | 4 | 5 | 6 | 7 |
| Copolymer | | A | B | C | D | E | F | G |
| 1,3-butadiene (Tg of Homopolymer: -109°C) | part | 42 | 42 | 42 | 30 | 30 | 49 | 42 |
| Butyl Acrylate (Tg of Homopolymer: -54°C) | part | 0 | 0 | 0 | 0 | 0 | 0 | 0 |
| Styrene (Tg of Homopolymer: 100°C) | part | 24 | 24 | 24 | 26.5 | 26.5 | 29.5 | 32.5 |
| Acrylonitrile (Tg of Homopolymer: 125°C) | part | 19 | 19 | 19 | 19 | 19 | 19 | 19 |
| Methyl Methacrylate (Tg of Homopolymer: 105°C) | part | 0 | 0 | 0 | 0 | 0 | 0 | 0 |

(continued)

| Table 1 | | | | | | | | | |
|---|---|---|---|---|---|---|---|---|---|
| | | | Example | | | | | | |
| | | | 1 | 2 | 3 | 4 | 5 | 6 | 7 |
| Copolymer | | | A | B | C | D | E | F | G |
| Fumaric Acid | | part | 1.5 | 1.5 | 1.5 | 0 | 0 | 0 | 1.5 |
| Acrylic Acid | | part | 13.5 | 13.5 | 13.5 | 24.5 | 24.5 | 2.5 | 5 |
| Sodium Dodecylbenzenesulfonate | | part | 1.00 | 1.00 | 0.75 | 1.00 | 1.00 | 1.25 | 1.25 |
| Water | | part | 160 | 160 | 160 | 160 | 160 | 160 | 160 |
| Mixed Part of Monomer Having Glass Transition Temperature of 80°C or more of Homopolymer | | part | 43.0 | 43.0 | 43.0 | 45.5 | 45.5 | 48.5 | 51.5 |
| Properties | pH | | 7 | 9 | 7 | 7 | 9 | 10 | 7 |
| | Average Particle Size by Photon Correlation Method | nm | 120 | 120 | 135 | 120 | 120 | 70 | 80 |
| | Glass Transition Temperature | °C | 0 | 0 | 0 | 25 | 25 | -10 | 0 |
| | Degree of Swelling of Electrolytic Solution | | 2.0 | 2.0 | 2.0 | 4.0 | 4.0 | 1.5 | 2.0 |
| Evaluation | Coatability | | A | A | B | A | A | B | B |
| | Input-Output Properties | | A | A | A | A | A | A | A |
| | Shape Retention Properties | | A | A | B | A | A | B | A |

[Table 2]

| Table 2 | | | | | | | |
|---|---|---|---|---|---|---|---|
| | | | Example | | | | |
| | | | 8 | 9 | 10 | 11 | 12 | 13 |
| Copolymer | | | H | I | J | K | L | M |
| 1,3-butadiene(Tg of Homopolymer: -109°C) | | part | 42 | 42 | 42 | 0 | 0 | 0 |
| Butyl Acrylate (Tg of Homopolymer: -54°C) | | part | 0 | 0 | 34 | 60 | 60 | 55 |
| Styrene (Tg of Homopolymer: 100°C) | | part | 32.5 | 51.5 | 9 | 0 | 25 | 10 |
| Acrylonitrile (Tg of Homopolymer: 125°C) | | part | 19 | 0 | 0 | 0 | 0 | 0 |
| Methyl Methacrylate (Tg of Homopolymer: 105°C) | | part | 0 | 0 | 0 | 25 | 0 | 20 |
| Fumaric Acid | | part | 1.5 | 1.5 | 1.5 | 0 | 0 | 0 |
| Acrylic Acid | | part | 5 | 5 | 13.5 | 15 | 15 | 15 |
| Sodium Dodecylbenzenesulfonate | | part | 1.25 | 1.00 | 1.00 | 1.00 | 1.00 | 1.00 |
| Water | | part | 160 | 160 | 160 | 130 | 130 | 130 |
| Mixed Part of Monomer Having Glass Transition Temperature of 80°C or more of Homopolymer | | part | 51.5 | 51.5 | 9.0 | 25.0 | 25.0 | 30.0 |

(continued)

| Table 2 | | | | | | | | | |
|---|---|---|---|---|---|---|---|---|---|
| | | | | Example | | | | | |
| | | | | 8 | 9 | 10 | 11 | 12 | 13 |
| Copolymer | | | | H | I | J | K | L | M |
| Properties | pH | | | 9 | 7 | 7 | 7 | 7 | 7 |
| | Average Particle Size by Photon Correlation Method | nm | | 80 | 120 | 100 | 120 | 120 | 120 |
| | Glass Transition Temperature | °C | | 0 | 0 | -30 | -10 | -10 | 0 |
| | Degree of Swelling of Electrolytic Solution | | | 2.0 | 1.2 | 1.3 | 8.0 | 9.0 | 8.0 |
| Evaluation | Coatability | | | A | B | A | B | B | B |
| | Input-Output Properties | | | A | B | A | A | A | A |
| | Shape Retention Properties | | | A | A | C | B | B | A |

[Table 3]

| Table 3 | | | | | | | |
|---|---|---|---|---|---|---|---|
| | | | Comparative Example | | | | |
| | | | 1 | 2 | 3 | 4 | 5 |
| Copolymer | | | N | O | P | Q | R |
| 1,3-butadiene (Tg of Homopolymer: -109°C) | | part | 42 | 42 | 27 | 42 | 0 |
| Butyl Acrylate (Tg of Homopolymer: -54°C) | | part | 0 | 0 | 0 | 0 | 60 |
| Styrene (Tg of Homopolymer: 100°C) | | part | 37.5 | 32.5 | 47.5 | 32.5 | 0 |
| Acrylonitrile (Tg of Homopolymer: 125°C) | | part | 19 | 19 | 19 | 19 | 0 |
| Methyl Methacrylate (Tg of Homopolymer: 105°C) | | part | 0 | 0 | 0 | 0 | 38.5 |
| Fumaric Acid | | part | 1.5 | 1.5 | 1.5 | 1.5 | 0 |
| Acrylic Acid | | part | 0 | 5 | 5 | 5 | 1.5 |
| Sodium Dodecylbenzenesulfonate | | part | 1.25 | 1.25 | 1.25 | 0.40 | 1.00 |
| Water | | part | 160 | 160 | 160 | 130 | 130 |
| Mixed Part of Monomer Having Glass Transition Temperature of 80°C or more of Homopolymer | | part | 56.5 | 51.5 | 66.5 | 51.5 | 38.5 |
| Properties | pH | | 7 | 5 | 7 | 7 | 7 |
| | Average Particle Size by Photon Correlation Method | nm | 80 | 80 | 80 | 150 | 120 |
| | Glass Transition Temperature | °C | 0 | 0 | 40 | 0 | 0 |
| | Degree of Swelling of Electrolytic Solution | | 2.0 | 2.0 | 3.0 | 2.0 | 9.0 |

(continued)

| Table 3 | | Comparative Example | | | | |
|---|---|---|---|---|---|---|
| | | 1 | 2 | 3 | 4 | 5 |
| Copolymer | | N | O | P | Q | R |
| Evaluation | Coatability | D | D | D | C | D |
| | Input-Output Properties | A | A | A | A | A |
| | Shape Retention Properties | C | C | B | C | C |

[Table 4]

| Table 4 | | | Comparative Example | | | | |
|---|---|---|---|---|---|---|---|
| | | | 6 | 7 | 8 | 9 | 10 |
| Copolymer | | | S | T | U | V | W |
| 1,3-butadiene(Tg of Homopolymer: -109°C) | | part | 0 | 0 | 0 | 27 | 42 |
| Butyl Acrylate (Tg of Homopolymer: -54°C) | | part | 60 | 30 | 60 | 0 | 0 |
| Styrene (Tg of Homopolymer: 100°C) | | part | 0 | 0 | 0 | 24 | 24 |
| Acrylonitrile (Tg of Homopolymer: 125°C) | | part | 0 | 0 | 0 | 19 | 19 |
| Methyl Methacrylate (Tg of Homopolymer: 105°C) | | part | 25 | 55 | 25 | 0 | 0 |
| Fumaric Acid | | part | 0 | 0 | 0 | 1.5 | 1.5 |
| Acrylic Acid | | part | 15 | 15 | 15 | 28.5 | 3.5 |
| Sodium Dodecylbenzenesulfonate | | part | 1.00 | 1.00 | 0.40 | 1.00 | 1.00 |
| Water | | part | 130 | 130 | 160 | 160 | 160 |
| Mixed Part of Monomer Having Glass Transition Temperature of 80°C or more of Homopolymer | | part | 25.0 | 55.0 | 25.0 | 43.0 | 43.0 |
| Properties | pH | | 5 | 7 | 7 | 7 | 11 |
| | Average Particle Size by Photon Correlation Method | nm | 120 | 120 | 180 | - | - |
| | Glass Transition Temperature | °C | 0 | 40 | 0 | - | - |
| | Degree of Swelling of Electrolytic Solution | | 8.0 | 9.0 | 8.0 | - | - |
| Evaluation | Coatability | | D | D | C | - | - |
| | Input-Output Properties | | A | A | A | - | - |
| | Shape Retention Properties | | C | B | C | - | - |

While the illustrative embodiments of the present invention are provided in the above description, such is for illustrative purpose only and it is not to be construed as limiting the scope of the present invention. Modification and variation of the present invention that will be obvious to those skilled in the art is to be covered by the following claims.

Industrial Applicability

The binder for an electrode, the composition for an electrode, and the electrode of the present invention are used for the electrochemical device such as lithium ion secondary cell, lithium ion capacitor, and electricity double layer capacitor.

**Claims**

1. A binder for an electrode containing copolymer latex, wherein
   the copolymer latex includes a structure unit derived from an ethylene unsaturated carboxylic acid monomer of 2 to 25 mass% and a structure unit derived from a monomer copolymerizable with the ethylene unsaturated carboxylic acid monomer of 75 to 98 mass%;
   the copolymer latex has a glass transition temperature of 25°C or less;
   the copolymer latex has an average particle size of 140 nm or less by a photon correlation method; and
   the copolymer latex has a pH of 7 to 10.

2. The binder for an electrode according to claim 1, wherein
   the copolymer latex has a degree of swelling of an electrolytic solution (ethylene carbonate/diethyl carbonate = 1/2 (ratio by volume)) of 1.3 to 10.

3. The binder for an electrode according to claim 1 or 2, wherein
   the copolymer latex includes the structure unit derived from the monomer copolymerizable with the ethylene unsaturated carboxylic acid monomer, and derived from a monomer having a glass transition temperature of a homopolymer of 80°C or more of 25 mass% or more.

4. A composition for an electrode containing the binder for an electrode according to any one of claims 1 to 3 and an active material.

5. An electrode comprising:

   an electric collector, and
   an electrode mixture layer formed from the composition for an electrode according to claim 4 provided on the electric collector.

## INTERNATIONAL SEARCH REPORT

International application No.

PCT/JP2018/016035

| A. CLASSIFICATION OF SUBJECT MATTER |
|---|
| Int. Cl. H01M4/62(2006.01)i, H01G11/38(2013.01)i, H01M4/13(2010.01)i, H01M4/139(2010.01)i |

According to International Patent Classification (IPC) or to both national classification and IPC

| B. FIELDS SEARCHED |
|---|
| Minimum documentation searched (classification system followed by classification symbols) |
| Int. Cl. H01M4/62, H01G11/38, H01M4/13, H01M4/139 |

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | WO 2005/064716 A1 (JSR CORP.) 14 July 2005, claims 1, 4, paragraphs [0012], [0021], [0024], [0042], table 1 & JP 2005-190747 A | 1-5 |

☐ Further documents are listed in the continuation of Box C.　　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 09.05.2018 | 22.05.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013229327 A
- JP 2016177948 A
- JP 2013140977 A
- JP 2012132396 A

**Non-patent literature cited in the description**

- Polymer Handbook